# EUROPEAN PATENT APPLICATION

(11) **EP 2 649 879 A1**
(43) Date of publication of application: **16.10.2013**
(21) Application number: 12163551.0
(22) Date of filing: 10.04.2012
(51) Int. Cl.: A01N 43/56, A01N 47/22, A01N 57/12, A01N 57/32, A01N 53/00, A01N 37/38, A01N 47/34, A01N 47/02, A01N 47/08, A01N 43/40, A01N 43/52, A01N 43/82, A01N 43/90, A01N 43/653, A01N 43/713, A01P 3/00, A01P 7/00

(54) **Pesticidal mixtures containing fluxapyroxad**

(71) Applicant: BASF SE, 67056 Ludwigshafen (DE)
(72) Inventor: Gewehr, Markus, Dr., 56288 Kastellaun (DE)

(57) **Abstract**

The present invention relates to synergistic mixtures comprising, as active components, fluxapyroxad as compound I and one insecticidal compound II in synergistic effective amounts.

## Description

The present invention relates to mixtures comprising
1) fluxapyroxad as compound I; and
2) one insectidical compound II selected from the group consisting of
   A) the acetylcholinesterase-inhibitors formetanate, isoprocarb, cadusafos, chlorethoxyfos, demeton-S-methyl, ethoprophos, fenamiphos, fosthiazate, isofenphos, omethoate, pyraclofos, pyridaphenthion, quinalphos, tebupirimfos;
   B) the sodium channel modulators acrinathrin, cycloprothrin, gamma-cyhalothrin, flucythrinate, halfenprox, 1-(4-chloro-3-fluoro-phenyl)-N-[(2-methyl-3-phenyl-phenyl)methoxy]-2-methylsulfanyl-ethanimine;
   C) the growth regulators cyromazine, chromafenozide, diflubenzuron, flufenoxuron, Noviflumuron, teflubenzuron; and
   D) the compounds chloropicrin, cycloxaprid, diflovidazin, azocyclotin, Bensultap, amitraz, fenpyroximate, flufiprole, flupyradifurone, fufenozide, pyrimidifen, bromopropylate, dicofol, fluensulfone, pyflubumide, flometoquin, N2-[2-(3-chloro-2-pyridyl)-5-[(5-methyltetrazol-2-yl)methyl]pyrazol-3-yl]-5-cyano-N1,3-dimethyl-phthalamide, 3-bromo-N2-[5-bromo-2-(3-chloro-2-pyridyl)pyrazol-3-yl]-5-chloro-N1-(1-cyclopropylethyl)phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide , 1-[(6-chloro-3-pyridyl)methyl]-7-methyl-8-nitro-5-propoxy-3,5,6,7-tetrahydro-2H-imidazo[1,2-a]pyridine], methyl (E)-2-[2-[[2-(2,4-dichloroanilino)-6-(trifluoromethyl)pyrimidin-4-yl]oxymethyl]phenyl]-3-methoxy-prop-2-enoate and 1-[(E)-[2-(4-cyanophenyl)-1-[3-(trifluoromethyl)phenyl]ethylidene]amino]-3-(4-(difluoromethoxy)phenyl)urea;
in synergistic effective amounts.

The invention furthermore relates to mixtures comprising fluxapyroxad as compound I and one insecticidal compound II selected from the group consisting of azamethiphos, acequinocyl, alanycarb, allethrin, amidoflumet, azadirachtin, azinphos-ethyl, azinphosmethyl, benclothiaz, bendiocarb, benfuracarb, beta-cypermethrin, bifenazate, bistrifluron, buprofezin, carbaryl, carbosulfan, cartap, chlorfenvinphos, chlorfluazuron, chlorpyrifos-methyl, clofentazine, cryomazine, cyenopyrafen, cyfluthrin, cyhalothrin, cyhexatin, cyphenothrin, cyramazin, diafenthiuron, diazinon, dichlorvos, dicrotophos, dimefluthrin, diofenolan, disulfoton, emamectin, esfenvalerate, ethion, ethiprole, etofenprox, etoxazole, fenazaquin, fenitrothion, fenoxycarb, fenoxycarb, fenpropathrin, fenthion, fenvalerate, flonicamid, fluacyprim, flucycloxuron, flufenerim, flupyrazofos, furathiocarb, halofenozide, hexaflumuron, hexythiazox, imicyafos, imiprothrin, isoxathion, lepimectin, lufenuron, malathion, metaflumizone, methidathion, methiocarb, methomyl, methoprene, methoxyfenozide, methyl-parathion, mevinphos, milbemectin, monocrotophos, novaluron, oxamyl, oxydemeton-methyl, paraoxon, parathion, permethrin, phenthoate, phorate, phosalone, phosmet, phosphamidon, phoxim, piperonyl butoxide, pirimicarb, pirimiphos-methyl, prallethrin, profenofos, profluthrin, propargite, propoxur, prothiofos, pymetrozine, pyrafluprole, pyrethrin I, pyrethrin II, pyridaben, pyridalyl, pyrifluquinazon, pyriprole, pyriproxyfen, resmethrin, silafluofen, spirodiclofen, spiromesifen, sulprophos, tau-fluvalinate, tebufenozide, tebufenpyrad, tetrachlorvinphos, tetramethrin, thiocyclam, thiodicarb, tolfenpyrad, tralomethrin, transfluthrin, triazamate, triazophos, trichlorfon, triflumuron, vaniliprole and zeta-cypermethrin.

The above-referred binary mixtures exhibit fungicidal synergistic effects and/or plant health synergistic effects.

The above-referred mixtures are herein below also referred as "inventive mixtures".

Moreover, the invention relates to a method for controlling harmful fungi, using the inventive mixtures and to the use of compound I and compound II for preparing such mixtures, and also to compositions comprising such mixtures.

Additionally, the present invention also comprises a method for protection of plant propagation material (preferably seed) from harmful fungi comprising contacting the plant propagation materials (preferably seeds) with an inventive mixture (except or the binary mixtures) in fungicidally effective amounts

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. In a particular preferred embodiment, the term propagation material denotes seeds.

Additionally, the present invention also comprises a method for protection of plant propagation material (preferably seed) from harmful fungi comprising contacting the plant propagation materials (preferably seeds) with the binary mixture in fungicidally effective amounts

Moreover, the invention relates to a method for controlling harmful fungi using the inventive mixtures and to the use of the compound I and the compound II for preparing such mixtures, and also to compositions comprising such mixtures.

The present invention further relates to plant-protecting active ingredient mixtures having synergistically enhanced action of improving the health of plants and to a method of applying such inventive mixtures to the plants.

N2-[2-(3-chloro-2-pyridyl)-5-[(5-(trifluormethyl)tetrazol-2-yl)methyl]pyrazol-3-yl]-5-cyano-N1,3-dimethyl-phthalamide (hereinafter also referred to as "C-1", formula set forth below) is disclosed in WO 2010069502 and WO 2011157664.

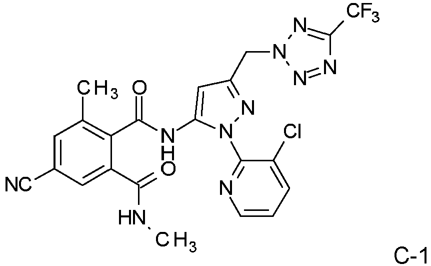

3-bromo-N2-[5-bromo-2-(3-chloro-2-pyridyl)pyrazol-3-yl]-5-chloro-N1-(1-cyclopropylethyl)phthalamide (hereinafter also referred to as "C- 2", formula set forth below) is disclosed in WO 2005/077934

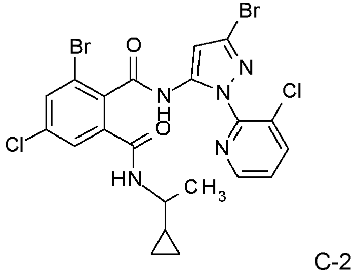

1-[2-fluoro-4-methyl-5-(2,2,2-trifluoroethylsulfinyl)phenyl]-3-(trifluoromethyl)-1,2,4-triazole (hereinafter also referred to as "C-3", formula set forth below) is disclosed in WO 06/043635 und WO 2011152320

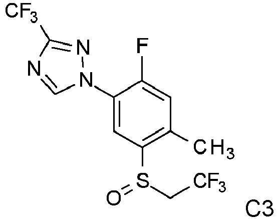

2-[2-fluoro-4-methyl-5-(2,2,2-trifluoroethylsulfinyl)phenyl]-5-(trifluoromethyl)-1,2,4-triazol-3-amine (hereinafter also referred to as "C-4", formula set forth below) is disclosed in WO 06/043635 und WO 2011152320

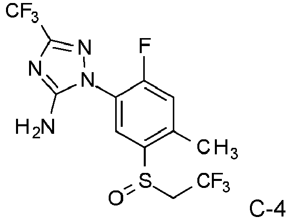

1-(4-chloro-3-fluoro-phenyl)-N-[(2-methyl-3-phenyl-phenyl)methoxy]-2-methylsulfanyl-ethanimine (hereinafter also referred to as "C-5", formula set forth below) is disclosed in CN154646A.

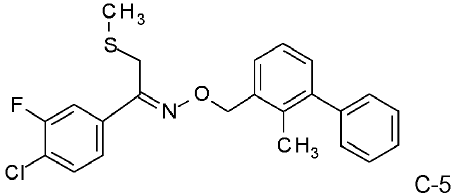

2-(5-amino-1,3,4-thiadiazol-2-yl)-N-[5-bromo-2-(3-chloro-2-pyridyl)pyrazol-3-yl]-4-chloro-6-methyl-benzamide (hereinafter also referred to as "C-6", formula set forth below) is disclosed in CN 101747325

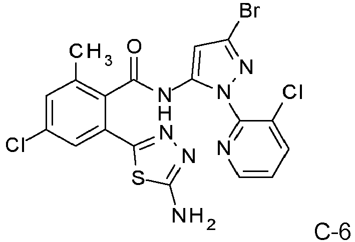

1-[(6-chloro-3-pyridyl)methyl]-7-methyl-8-nitro-5-propoxy-3,5,6,7-tetrahydro-2H-imidazo[1,2-a]pyridine (hereinafter also referred to as "C-7 ", formula set forth below) is disclosed in WO 2007/101369

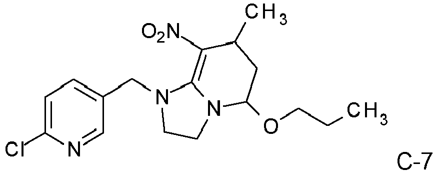

Methyl (E)-2-[2-[[2-(2,4-dichloroanilino)-6-(trifluoromethyl)pyrimidin-4-yl]oxymethyl]phenyl]-3-methoxy-prop-2-enoate (hereinafter also referred to as "C-8", formula set forth below) is disclosed in WO 2010/139271.

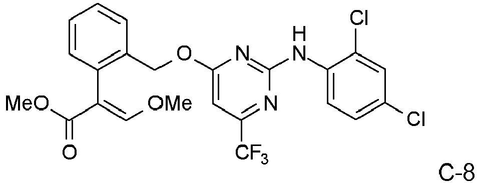

1-[(E)-[2-(4-cyanophenyl)-1-[3-(trifluoromethyl)phenyl]ethylidene]amino]-3-(4-(difluoromethoxy)phenyl)urea (hereinafter also referred to as "C-9", formula set forth below) is disclosed in CN1071577A

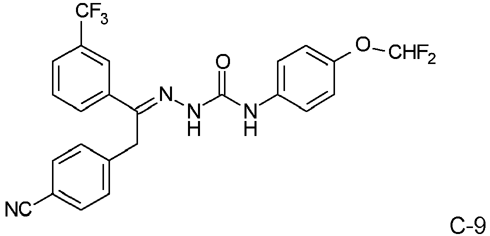

Fluxapyroxad is known from WO 2006/087343 and can be prepared in the manner described. The remaining compounds II as well as their pesticidal action and methods for producing them are generally known. For instance, they may be found in the e-Pesticide Manual V5.2 (ISBN 978 1 901396 85 0) (2008-2011) among other publications.

The published PCT applications WO2006/087343, WO2008/034785, WO2010/000790, WO2009/098225, WO2010/092028, WO2010/000791, WO2010/092032, WO2010/092119 and WO2009/098230 disclose several synergistic mixtures with inter alia fluxapyroxad, further fungicides and/or insecticides. However, none of these documents explicitly discloses the mixtures referred to above.

However, the specific mixtures of the present invention, which are based on a compound I and compound II are not explicitly disclosed therein. In addition, the specific combinations of compound I and II as defined above, are also not mentioned therein.

One typical problem arising in the field of fungal control lies in the need to reduce the dosage rates of the active ingredient in order to reduce or avoid unfavorable environmental or toxicological effects whilst still allowing effective fungal control.

Another problem encountered concerns the need to have available fungal control agents which are effective against a broad spectrum of harmful fungi.

Another difficulty in relation to the use of fungicides is that the repeated and exclusive application of an individual fungicidal compound leads in many cases to a rapid selection of harmful fungi, which have developed natural or adapted resistance against the active compound in question. Therefore there is a need for pest control agents that help prevent or overcome resistance.

Another problem underlying the present invention is the desire for compositions that improve plants, a process which is commonly and hereinafter referred to as "plant health".

The term plant health comprises various sorts of improvements of plants that are not connected to the control of pests. For example, advantageous properties that may be mentioned are improved crop characteristics including: emergence, crop yields, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less seeds needed, more productive tillers, earlier flowering, early grain maturity, less plant verse (lodging), increased shoot growth, enhanced plant vigor, increased plant stand and early and better germination; or any other advantages familiar to a person skilled in the art.

It was therefore an objectiv of the present invention to provide pesticidal mixtures which solve the problems of reducing the dosage rate and / or enhancing the spectrum of activity and / or to resistance management and/or promoting the health of plants.

We have found that this object is in part or in whole achieved by the mixtures comprising the active compounds defined in the outset.

Especially, it has been found that the mixtures as defined in the outset show markedly enhanced action against pests compared to the control rates that are possible with the individual compounds and/or is suitable for improving the health of plants when applied to plants, parts of plants, seeds, or at their locus of growth.

It has been found that the action of the inventive mixtures goes far beyond the fungicidal and/or plant health improving action of the active compounds present in the mixture alone.

Moreover, we have found that simultaneous, that is joint or separate, application of the compound I and the compound II or successive application of the compound I and the compound II allows enhanced control of harmful fungi, compared to the control rates that are possible with the individual compounds (synergistic mixtures).

Moreover, we have found that simultaneous, that is joint or separate, application of the compound I and the compound II or successive application of the compound I and the compound II provides enhanced plant health effects compared to the plant health effects that are possible with the individual compounds.

The ratio by weight of compound I and II is from 500:1 to 1:500, preferably from 100:1 to 1:100 more preferably from 50:1 to 1:50, most preferably from 20:1 to 1:20. Utmost preferred ratios are form 10:1 1 to 1:10

Thus, preferably the present invention relates to mixtures comprising
1) fluxapyroxad as compound I; and
2) one insectidical compound II selected from the group consisting of
   E) the acetylcholinesterase-inhibitors formetanate, isoprocarb, cadusafos, chlorethoxyfos, demeton-S-methyl, ethoprophos, fenamiphos, fosthiazate, isofenphos, omethoate, pyraclofos, pyridaphenthion, quinalphos, tebupirimfos;
   F) the sodium channel modulators acrinathrin, cycloprothrin, gamma-cyhalothrin, flucythrinate, halfenprox, 1-(4-chloro-3-fluoro-phenyl)-N-[(2-methyl-3-phenyl-phenyl)methoxy]-2-methylsulfanyl-ethanimine;
   G) the growth regulators cyromazine, chromafenozide, diflubenzuron, flufenoxuron, Noviflumuron, teflubenzuron; and
   H) the compounds chloropicrin, cycloxaprid, diflovidazin, azocyclotin, Bensultap, amitraz, fenpyroximate, flufiprole, flupyradifurone, fufenozide, pyrimidifen, bromopropylate, dicofol, fluensulfone, pyflubumide, flometoquin, N2-[2-(3-chloro-2-pyridyl)-5-[(5-methyltetrazol-2-yl)methyl]pyrazol-3-yl]-5-cyano-N1,3-dimethyl-phthalamide, 3-bromo-N2-[5-bromo-2-(3-chloro-2-pyridyl)pyrazol-3-yl]-5-chloro-N1-(1-cyclopropylethyl)phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide , 1-[(6-chloro-3-pyridyl)methyl]-7-methyl-8-nitro-5-propoxy-3,5,6,7-tetrahydro-2H-imidazo[1,2-a]pyridine], methyl (E)-2-[2-[[2-(2,4-dichloroanilino)-6-(trifluoromethyl)pyrimidin-4-yl]oxymethyl]phenyl]-3-methoxy-prop-2-enoate and 1-[(E)-[2-(4-cyanophenyl)-1-[3-(trifluoromethyl)phenyl]ethylidene]amino]-3-(4-(difluoromethoxy)phenyl)urea;
   in synergistic effective amounts, wherein the ratio by weight of compound I and II is from 500:1 to 1:500, preferably from 100:1 to 1:100 more preferably from 50:1 to 1:50, most preferably from 20:1 to 1:20, and utmost preferred from 10:1 1 to 1:10

In a more preferred embodiment the present invention relates to mixtures comprising
1) fluxapyroxad as compound I; and
2) one insectidical compound II selected from the group consisting of
   A) the acetylcholinesterase-inhibitors isoprocarb, cadusafos, ethoprophos, fenamiphos, fosthiazate, omethoate, quinalphos;
   B) the sodium channel modulators gamma-cyhalothrin, flucythrinate;
   C) the growth regulators: cyromazine, diflubenzuron, flufenoxuron, noviflumuron, teflubenzuron; and
   D) the compounds chloropicrin, cycloxaprid, amitraz, fenpyroximate, flufiprole, dicofol, flupyradifurone, pyflubumide, N2-[2-(3-chloro-2-pyridyl)-5-[(5-methyltetrazol-2-yl)methyl]pyrazol-3-yl]-5-cyano-N1,3-dimethyl-phthalamide, 3-bromo-N2-[5-bromo-2-(3-chloro-2-pyridyl)pyrazol-3-yl]-5-chloro-N1-(1-cyclopropylethyl)phthalamide, 1-[2-fluoro-4-methyl-5-(2,2,2-trifluoroethylsulfinyl)phenyl]-3-(trifluoromethyl)-1,2,4-triazole , 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide, 1-[(6-chloro-3-pyridyl)methyl]-7-methyl-8-nitro-5-propoxy-3,5,6,7-tetrahydro-2H-imidazo[1,2-a]pyridine;
in synergistic effective amounts, wherein the ratio by weight of compound I and II is from 500:1 to 1:500, preferably from 100:1 to 1:100 more preferably from 50:1 to 1:50, most preferably from 20:1 to 1:20, and utmost preferred from 10:1 to 1:10

In a most preferred embodiment the present invention relates to mixtures comprising
1) fluxapyroxad as compound I; and
2) one insecticidal compound II selected from the group consisting of fosthiazate, gamma-cyhalothrin, flucythrinate, diflubenzuron, flufenoxuron, flufiprole, flupyradifurone, teflubenzuron, chloropicrin, cycloxaprid, N2-[2-(3-chloro-2-pyridyl)-5-[(5-methyltetrazol-2-yl)methyl]pyrazol-3-yl]-5-cyano-N1,3-dimethyl-phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide], 1-[(6-chloro-3-pyridyl)methyl]-7-methyl-8-nitro-5-propoxy-3,5,6,7-tetrahydro-2H-imidazo[1,2-a]pyridine;
in synergistic effective amounts, wherein the ratio by weight of compound I and II is from 500:1 to 1:500, preferably from 100:1 to 1:100 more preferably from 50:1 to 1:50, most preferably from 20:1 to 1:20, and utmost preferred from 10:1 1 to 1:10.

In this subset, the following mixtures are especially preferred:
Fluxapyroxad and flucythrinate in synergistically effective amounts, preferably in a ratio by weight from 500:1 to 1:500, preferably from 100:1 to 1:100 more preferably from 50:1 to 1:50, most preferably from 20:1 to 1:20, and utmost preferred from 10:1 1 to 1:10.
Fluxapyroxad and flufenoxuron in synergistically effective amounts, preferably in a ratio by weight from 500:1 to 1:500, preferably from 100:1 1 to 1:100 more preferably from 50:1 to 1:50, most preferably from 20:1 to 1:20, and utmost preferred from 10:1 to 1:10.
Fluxapyroxad and flufiprole in synergistically effective amounts, preferably in a ratio by weight from 500:1 to 1:500, preferably from 100:1 1 to 1:100 more preferably from 50:1 to 1:50, most preferably from 20:1 to 1:20, and utmost preferred from 10:1 1 to 1:10.
Fluxapyroxad and flupyradifurone in synergistically effective amounts, preferably in a ratio by weight from 500:1 to 1:500, preferably from 100:1 1 to 1:100 more preferably from 50:1 to 1:50, most preferably from 20:1 to 1:20, and utmost preferred from 10:1 1 to 1:10.
Fluxapyroxad and teflubenzuron in synergistically effective amounts, preferably in a ratio by weight from 500:1 to 1:500, preferably from 100:1 to 1:100 more preferably from 50:1 to 1:50, most preferably from 20:1 to 1:20, and utmost preferred from 10:1 1 to 1:10.
Fluxapyroxad and cycloxaprid in synergistically effective amounts, preferably in a ratio by weight from 500:1 to 1:500, preferably from 100:1 to 1:100 more preferably from 50:1 to 1:50, most preferably from 20:1 to 1:20, and utmost preferred from 10:1 to 1:10.
Fluxapyroxad and C-1 in synergistically effective amounts, preferably in a ratio by weight from 500:1 to 1:500, preferably from 100:1 to 1:100 more preferably from 50:1 to 1:50, most preferably from 20:1 to 1:20, and utmost preferred from 10:1 to 1:10.
Fluxapyroxad and C-3 in synergistically effective amounts, preferably in a ratio by weight from 500:1 to 1:500, preferably from 100:1 1 to 1:100 more preferably from 50:1 to 1:50, most preferably from 20:1 to 1:20, and utmost preferred from 10:1 1 to 1:10.
Fluxapyroxad and C-4 in synergistically effective amounts, preferably in a ratio by weight from 500:1 to 1:500, preferably from 100:1 to 1:100 more preferably from 50:1 to 1:50, most preferably from 20:1 to 1:20, and utmost preferred from 10:1 to 1:10.
Fluxapyroxad and C-6 in synergistically effective amounts, preferably in a ratio by weight from 500:1 to 1:500, preferably from 100:1 1 to 1:100 more preferably from 50:1 to 1:50, most preferably from 20:1 to 1:20, and utmost preferred from 10:1 1 to 1:10.
Fluxapyroxad and C-7 in synergistically effective amounts, preferably in a ratio by weight from 500:1 to 1:500, preferably from 100:1 1 to 1:100 more preferably from 50:1 to 1:50, most preferably from 20:1 to 1:20, and utmost preferred from 10:1 1 to 1:10.

The present invention also relates to mixtures comprising fluxapyroxad as compound I and one one insecticidal compound II selected from the group consisting of azamethiphos, acequinocyl, alanycarb, allethrin, amidoflumet, azadirachtin, azinphos-ethyl, azinphos-methyl, benclothiaz, bendiocarb, benfuracarb, beta-cypermethrin, bifenazate, bistrifluron, buprofezin, carbaryl, carbosulfan, cartap, chlorfenvinphos, chlorfluazuron, chlorpyrifos-methyl, clofentazine, cryomazine, cyenopyrafen, cyfluthrin, cyhalothrin, cyhexatin, cyphenothrin, cyramazin, diafenthiuron, diazinon, dichlorvos, dicrotophos, dimefluthrin, diofenolan, disulfoton, emamectin, esfenvalerate, ethion, ethiprole, etofenprox, etoxazole, fenazaquin, fenitrothion, fenoxycarb, fenoxycarb, fenpropathrin, fenthion, fenvalerate, flonicamid, fluacyprim, flucycloxuron, flufenerim, flupyrazofos, furathiocarb, halofenozide, hexaflumuron, hexythiazox, imicyafos, imiprothrin, isoxathion, lepimectin, lufenuron, malathion, metaflumizone, methidathion, methiocarb, methomyl, methoprene, methoxyfenozide, methyl-parathion, mevinphos, milbemectin, monocrotophos, novaluron, oxamyl, oxydemeton-methyl, paraoxon, parathion, permethrin, phenthoate, phorate, phosalone, phosmet, phosphamidon, phoxim, piperonyl butoxide, pirimicarb, pirimiphos-methyl, prallethrin, profenofos, profluthrin, propargite, propoxur, prothiofos, pymetrozine, pyrafluprole, pyrethrin I , pyrethrin II, pyridaben, pyridalyl, pyrifluquinazon, pyriprole, pyriproxyfen, resmethrin, silafluofen, spirodiclofen, spiromesifen, sulprophos, tau-fluvalinate, tebufenozide, tebufenpyrad, tetrachlorvinphos, tetramethrin, thiocyclam, thiodicarb, tolfenpyrad, tralomethrin, transfluthrin, triazamate, triazophos, trichlorfon, triflumuron, vaniliprole and zeta-cypermethrin.

in synergistic effective amounts, wherein the ratio by weight of compound I and **II** is from 500:1 to 1:500, preferably from 100:1 1 to 1:100 more preferably from 50:1 to 1:50, most preferably from 20:1 to 1:20, and utmost preferred from 10:1 1 to 1:10.

All above-referred mixtures are herein below referred to as "inventive mixtures" or "mixtures according to the present invention.

The inventive mixtures can further contain one or more insecticides, fungicides, herbicides.

The inventive mixtures can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the inventive mixtrues on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for composition types and their preparation are:
i) Water-soluble concentrates (SL, LS)
   10-60 wt% of an inventive mixture and 5-15 wt% wetting agent (e.g. alcohol alkoxylates) are dissolved in water and/or in a water-soluble solvent (e.g. alcohols) ad 100 wt%. The active substance dissolves upon dilution with water.
ii) Dispersible concentrates (DC)
   5-25 wt% of an inventive mixture and 1-10 wt% dispersant (e. g. polyvinylpyrrolidone) are dissolved in organic solvent (e.g. cyclohexanone) ad 100 wt%. Dilution with water gives a dispersion.
iii) Emulsifiable concentrates (EC)
   15-70 wt% of an inventive mixture and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.
iv) Emulsions (EW, EO, ES)
   5-40 wt% of an inventive mixture and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.
v) Suspensions (SC, OD, FS)
   In an agitated ball mill, 20-60 wt% of an inventive mixture are comminuted with addition of 2-10 wt% dispersants and wetting agents (e.g. sodium lignosulfonate and alcohol ethoxylate), 0.1-2 wt% thickener (e.g. xanthan gum) and water ad 100 wt% to give a fine active substance suspension. Dilution with water gives a stable suspension of the active substance. For FS type composition up to 40 wt% binder (e.g. polyvinylalcohol) is added.
vi) Water-dispersible granules and water-soluble granules (WG, SG)
   50-80 wt% of an inventive mixture are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.
vii) Water-dispersible powders and water-soluble powders (WP, SP, WS)
   50-80 wt% of an inventive mixture are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.
viii) Gel (GW, GF)
   In an agitated ball mill, 5-25 wt% of an inventive mixture are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.
iv) Microemulsion (ME)
   5-20 wt% of an inventive mixture are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100 %. This mixture is stirred for 1 h to produce spontaneously a thermodynamically stable microemulsion.
iv) Microcapsules (CS)
   An oil phase comprising 5-50 wt% of an inventive mixture, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of an inventive mixture according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.
ix) Dustable powders (DP, DS)
   1-10 wt% of an inventive mixture are ground finely and mixed intimately with solid carrier (e.g. finely divided kaolin) ad 100 wt%.
x) Granules (GR, FG)
   0.5-30 wt% of an inventive mixture is ground finely and associated with solid carrier (e.g. silicate) ad 100 wt%. Granulation is achieved by extrusion, spray-drying or fluidized bed.
xi) Ultra-low volume liquids (UL)
   1-50 wt% of an inventive mixture are dissolved in organic solvent (e.g. aromatic hydrocarbon) ad 100 wt%.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The resulting agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Solutions for seed treatment (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying the inventive mixtures and compositions thereof, respectively, on to plant propagation material, especially seeds include dressing, coating, pelleting, dusting, soaking and in-furrow application methods of the propagation material. Preferably, the inventive mixtures or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.01 to 1.0 kg per ha, and in particular from 0.05 to 0.75 kg per ha.

In treatment of plant propagation materials such as seeds, e. g. by dusting, coating or drenching seed, amounts of active substance of from 0.01-10kg, preferably from 0.1-1000 g, more preferably from 1-100 g per 100 kilogram of plant propagation material (preferably seeds) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary or ternary mixture may be mixed by the user himself in a spray tank and further auxiliaries may be added, if appropriate.

In a further embodiment, either individual compounds of the inventive mixtures formulated as composition or partially premixed components, e. g. components set forth in the inventive mixtures may be mixed by the user in a spray tank and further auxiliaries and additives may be added, if appropriate (tank mix).

In a further embodiment, either individual components of the composition according to the invention or partially premixed components, e. g. components comprising the compound I and II, can be applied jointly (e..g. after tankmix) or consecutively.

As said above, the present invention comprises a method for controlling pests, that means animal pests and/or harmful fungi, wherein the pest, their habitat, breeding grounds, their locus or the plants to be protected against pest attack, the soil or plant propagation material (preferably seed) are treated with an fungicidally effective amount of a mixture.

Advantageously, the inventive mixtures are suitable for controlling the following fungal plant diseases:
*Albugo* spp. (white rust) on ornamentals, vegetables (e. g. *A. candida*) and sunflowers (e. g. *A. tragopogonis*); *Alternaria* spp. (Alternaria leaf spot) on vegetables, rape (*A*. *brassicola* or *brassicae*), sugar beets (*A. tenuis*), fruits, rice, soybeans, potatoes (e. g. *A. solani* or *A. alternata*), tomatoes (e. g. *A. solani* or *A. alternata*) and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight (*D. maydis*) or Northern leaf blight (*B. zeicola*) on corn, e. g. spot blotch (*B. sorokiniana*) on cereals and e.g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn (e.g. Gray leaf spot: *C. zeae-maydis*), rice, sugar beets (e. g. *C. beticola*), sugar cane, vegetables, coffee, soybeans (e. g. *C. sojina* or *C. kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*), corn (e. g. *C. graminicola:* Anthracnose stalk rot), soft fruits, potatoes (e. g. *C. coccodes:* black dot), beans (e. g. *C. lindemuthianum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri:* Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres,* net blotch) and wheat (e. g. *D. tritici-repentis*: tan spot), rice and turf; Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum*), *Phaeoacremonium aleophilum* and/or *Botryosphaeria obtusa; Elsinoe* spp. on pome fruits (*E. pyri*), soft fruits (*E. veneta*: anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae*)*,* vegetables (e. g. *E. pisi*), such as cucurbits (e. g. *E. cichoracearum*), cabbages, rape (e. g. *E. cruciferarum*); *Eutypa lata* (Eutypa canker or dieback, anamorph: *Cytosporina lata, syn. Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi*: Bakanae disease); *Glomerella cingulata* on vines, pome fruits and other plants and *G. gossypii* on cotton; Grain-staining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici*, Septoria blotch) on wheat or *M. fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P. tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli*, teleomorph: *Diaporthe phaseolorum*); *Physoderma maydis* (brown spots) on corn; Phy*tophthora* spp. (wilt, root, leaf, fruit and stem root) on various plants, such as paprika and cucurbits (e. g. *P. capsici*), soybeans (e. g. *P. megasperma*, syn. *P. sojae*), potatoes and tomatoes (e. g. *P. infestans*: late blight) and broad-leaved trees (e. g. *P. ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ,rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea*, rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. S. *sclerotiorum*) and soybeans (e. g. *S. rolfsii* or *S. sclerotiorum*); *Septoria* spp. on various plants, e. g. *S. glycines* (brown spot) on soybeans, S. *tritici* (Septoria blotch) on wheat and *S*. (syn. *Stagonospora*) nodorum (Stagonospora blotch) on cereals; *Uncinula* (syn. *Erysiphe*) *necator* (powdery mildew, anamorph: *Oidium tucker*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterra*nea (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. T. *tritici* (syn. T. *caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U*. *phaseoli*) and sugar beets (e. g. *U. betae*); *Ustilago* spp. (loose smut) on cereals (e. g. *U. nuda* and *U. avaenae*), corn (e. g. *U. maydis*: corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

The mixtures according to the present inventino and compositions thereof, respectively, are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans*, *Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., Pae*cilomyces* spp. and Zygomycetes such as *Mucor* spp., and in addition in the protection of stored products and harvest the following yeast fungi are worthy of note: *Candida* spp. and *Saccharomyces cerevisae.*

They are particularly important for controlling a multitude of fungi on various cultivated plants, such as bananas, cotton, vegetable species (for example cucumbers, beans and cucurbits), cereals such as wheat, rye, barley, rice, oats; grass coffee, potatoes, corn, fruit species, soya, tomatoes, grapevines, ornamental plants, sugar cane and also on a large number of seeds. In a preferred embodiment, the inventive mixtures are used in soya (soybean), cereals and corn.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

The inventive mixtures are employed by treating the fungi or the plants, plant propagation materials (preferably seeds), materials or soil to be protected from fungal attack with a fungicidally effective amount of the active compounds. The application can be carried out both before and after the infection of the materials, plants or plant propagation materials (preferably seeds) by the pests.

In the context of the present invention, the term plant refers to an entire plant, a part of the plant or the propagation material of the plant.

The inventive mixtures and compositions thereof are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, the inventive mixtures and compositions thereof, respectively are used for controlling a multitude of fungi on field crops, such as potatoes, sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

Preferably, treatment of plant propagation materials with the inventive mixtures and compositions thereof, respectively, is used for controlling a multitude of fungi on cereals, such as wheat, rye, barley and oats; rice, corn, cotton, potatoes, legumes, fruits, vines, tomatoes and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis*, such as δ-endotoxins, e. g. CrylA(b), CrylA(c), CrylF, CrylF(a2), CrylIA(b), CrylIIA, CrylIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhab*dus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

## Claims

1. Mixtures comprising, as active components,
1) fluxapyroxad as comound I; and
2) one insectidical compound II selected from the group consisting of
A) the cetylcholinesterase-inhibitors formetanate, isoprocarb, cadusafos, chlorethoxyfos, demeton-S-methyl, ethoprophos, fenamiphos, fosthiazate, isofenphos, omethoate, pyraclofos, pyridaphenthion, quinalphos, tebupirimfos;
B) the sodium channel modulators acrinathrin, cycloprothrin, gamma-cyhalothrin, flucythrinate, halfenprox, 1-(4-chloro-3-fluoro-phenyl)-N-[(2-methyl-3-phenyl-phenyl)methoxy]-2-methylsulfanyl-ethanimine;
C) the growth regulators cyromazine, chromafenozide, diflubenzuron, flufenoxuron, Noviflumuron, teflubenzuron; and
D) the compounds chloropicrin, cycloxaprid, diflovidazin, azocyclotin, Bensultap, amitraz, fenpyroximate, flufiprole, flupyradifurone, fufenozide, pyrimidifen, bromopropylate, dicofol, fluensulfone, pyflubumide, flometoquin, N2-[2-(3-chloro-2-pyridyl)-5-[(5-methyltetrazol-2-yl)methyl]pyrazol-3-yl]-5-cyano-N 1,3-dimethyl-phthalamide, 3-bromo-N2-[5-bromo-2-(3-chloro-2-pyridyl)pyrazol-3-yl]-5-chloro-N1-(1-cyclopropylethyl)phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzam ide, 1-[(6-chloro-3-pyridyl)methyl]-7-methyl-8-nitro-5-propoxy-3,5,6,7-tetrahydro-2H-imidazo[1,2-a]pyridine, methyl (E)-2-[2-[[2-(2,4-dichloroanilino)-6-(trifluoromethyl)pyrimidin-4-yl]oxymethyl]phenyl]-3-methoxy-prop-2-enoate and 1-[(E)-[2-(4-cyanophenyl)-1-[3-(trifluoromethyl)phenyl]ethylidene]amino]-3-(4-(difluoromethoxy)phenyl)urea;
in synergistic effective amounts.

2. The mixture according to claim 1, wherein compound II is selected from the group consisting of
E) the acetylcholinesterase-inhibitors isoprocarb, cadusafos, ethoprophos, fenamiphos, fosthiazate, omethoate, quinalphos;
F) the sodium channel modulators gamma-cyhalothrin, flucythrinate;
G) the growth regulators: cyromazine, diflubenzuron, flufenoxuron, noviflumuron, teflubenzuron; and
H) the compounds chloropicrin, cycloxaprid, amitraz, fenpyroximate, flufiprole, dicofol, flupyradifurone, pyflubumide, N2-[2-(3-chloro-2-pyridyl)-5-[(5-methyltetrazol-2-yl)methyl]pyrazol-3-yl]-5-cyano-N 1,3-dimethyl-phthalamide, 3-bromo-N2-[5-bromo-2-(3-chloro-2-pyridyl)pyrazol-3-yl]-5-chloro-N1-(1-cyclopropylethyl)phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide, 1-[(6-chloro-3-pyridyl)methyl]-7-methyl-8-nitro-5-propoxy-3,5,6,7-tetrahydro-2H-imidazo[1,2-a]pyridine.

3. The mixture according to claim 1, wherein compound II is selected from the group consisting of fosthiazate, gamma-cyhalothrin, flucythrinate, diflubenzuron, flufenoxuron, flufiprole, flupyradifurone, teflubenzuron, chloropicrin, cycloxaprid, N2-[2-(3-chloro-2-pyridyl)-5-[(5-methyltetrazol-2-yl)methyl]pyrazol-3-yl]-5-cyano-N1,3-dimethyl-phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide, 1-[(6-chloro-3-pyridyl)methyl]-7-methyl-8-nitro-5-propoxy-3,5,6,7-tetrahydro-2H-imidazo[1,2-a]pyridine.

4. The mixture according to claim 1, wherein compound II is selected from the group consisting of flucythrinate, flufenoxuron, flufiprole, flupyradifurone, teflubenzuron, cycloxaprid N2-[2-(3-chloro-2-pyridyl)-5-[(5-methyltetrazol-2-yl)methyl]pyrazol-3-yl]-5-cyano-N 1,3-dimethyl-phthalamide, 1-[2-fluoro-4-methyl-5-(2,2,2-trifluoroethylsulfinyl)phenyl]-3-(trifluoromethyl)-1,2,4-triazole, 2-[2-fluoro-4-methyl-5-(2,2,2-trifluoroethylsulfinyl)phenyl]-5-(trifluoromethyl)-1,2,4-triazol-3-amine, 2-(5-amino-1,3,4-thiadiazol-2-yl)-N-[5-bromo-2-(3-chloro-2-pyridyl)pyrazol-3-yl]-4-chloro-6-methyl-benzamide, 1-[(6-chloro-3-pyridyl)methyl]-7-methyl-8-nitro-5-propoxy-3,5,6,7-tetrahydro-2H-imidazo[1,2-a]pyridine.

5. The mixture according to claim 1, wherein the ratio by weight of compound I to compound II is from 500:1 to 1:500 .

6. A fungicidal composition, comprising a liquid or solid carrier and a mixture as defined in any of claims 1 to 5.

7. A method for controlling harmful fungi wherein the fungi, their habitat, their locus or the plants to be protected against fungal attack, the soil or plant propagation material is treated with an effective amount of a mixture as defined in any of claims 1 to 5.

8. A method for improving the health of plants, wherein the plant, the locus where the plant is growing or is expected to grow or plant propagation material from which the plant grows is treated with an effective amount of a mixture as defined in any of claims 1 to 5.

9. A method for protection of plant propagation material from harmful fungi comprising contacting the plant propagation materials with a mixture as defined in any of claims 1 to 6 in fungicidally effective amounts.

10. A method as claimed in claim 8 or 9, wherein the mixture as defined in any of claims 1 to 5 is applied in an amount of from 0.01 g to 10 kg per 100 kg of plant propagation materials.

11. A method as claimed in claims 7 to 10, wherein compound I and compounds II as defined in any of claims 1 to 5 are applied simultaneously, that is jointly or separately, or in succession.

12. Plant propagation material, comprising the mixture as defined in any of claims 1 to 5 in an amount of from 0.01 g to 10 kg per 100 kg of plant propagation material.
